# EUROPEAN PATENT APPLICATION

(11) **EP 1 724 973 A1**
(43) Date of publication of application: **22.11.2006**
(21) Application number: 05710655.1
(22) Date of filing: 24.02.2005
(51) Int. Cl.: H04L 12/44, H04L 12/46, H04L 12/56

(54) **ACCESS NETWORK SYSTEM, SUBSCRIBER STATION DEVICE, AND NETWORK TERMINAL DEVICE**

(30) Priority: 25.02.2004 JP 2004050403
(71) Applicant: MATSUSHITA ELECTRIC INDUSTRIAL CO., LTD., Kadoma-shi, Osaka 571-8501 (JP)
(72) Inventor: YOKOBORI, Michiru Matsushita Electric Indust. Co, Chuo-ku, Osaka-shi, Osaka 540-6319 (JP); KAWAKAMI, Tetsuya c/o Matsushita El.Ind.Co.Ltd., Chuo-ku, Osaka-shi, Osaka 540-6319 (JP); SUZUKI, Yoshihiro c/o Matsushita El.Ind.Co.Ltd., Chuo-ku, Osaka-shi, Osaka 540-6319 (JP)
(74) Representative: Lehmann, Judith Christina
(86) International application number: PCT/JP2005/003054
(87) International publication number: WO 2005/081464

(57) **Abstract**

The present invention provides a technique to freely select ISP of connection destination for each subscriber terminal while maintaining various advantages when using VLAN, such as accomplishment of inexpensive and simple arrangement and achieving of high-speed communication, and to ensure reliable communication between the subscriber terminal and ISP, and also to cope with Nomadic connection. According to this technique, an access network 3 is provided to achieve ISP connection, by which the subscriber terminal 1 can make access to a given network such as Internet. The access network comprises an ISP side terminal device 6, a subscriber station device 7, and a subscriber side terminal device 9. The transfer of a layer 2 level using VLAN tag can be accomplished between the ISP side terminal device and the subscriber station device (a first network 4), and between the subscriber station device and the subscriber side terminal device (a second network 5). To the frame to be transferred in the first network, a frame header including VLAN tag added at the transmission in the second network is added.

## Description

### TECHNICAL FIELD

The present invention relates to an access network system, a subscriber station device, and a network terminal device, by which a subscriber can perform communication between a subscriber terminal owned by the subscriber and a given communication network via an access network made up by a plurality of relay stations. In particular, the invention relates to an access network system, a subscriber station device, and a network terminal device, by which an access network can be made up between the subscriber terminal and an ISP (Internet Service Provider), and through which the subscriber terminal can have access to Internet via an ISP network provided by VLAN (Virtual Local Area Network; Virtual LAN) and ISP.

### BACKGROUND ART

In general, an IP network is used as an access network to connect a subscriber terminal with an ISP. A packet transmitted from the subscriber terminal is sent to the ISP via IP tunnel. However, in the processing of encapsulation of IP packet to match IP tunnel, the load of the processing is high in a device to accommodate the subscriber terminal, and this often causes hindrance to high-speed communication.

To solve the above problems, new techniques are described in the Patent Document 1 and the Non-Patent Document 1 as given below, in which an access network is made up with VLAN, and a device for centralized management of various types of information relating to the setting of VLAN and to traffic in the access network is provided, and route control is performed for VLAN route by this management device. According to this technique, it is possible to identify in advance a plurality of routes (redundant routes) in the access network between edge devices. Also, it is possible to conduct the route switchover caused by trouble at high speed and to improve throughput. Further, according to this technique, the problems by broadband access server can be solved when PPPoE (Point-to-Point Protocol Over Ethernet (registered trademark)) is adopted.

On the other hand, a new technique is described in the Patent Document 2 as given below. According to this technique, in a communication system to provide communication service to make connection between two different user sites by VPN (Virtual Private Network), in a hierarchical network including edge devices connected to each to two different user sites, frame of user MAC (Media Access Control) is encapsulated, and hierarchical MAC frame added with hierarchical header is transmitted. In this hierarchical header, edge source address (e.g. address of physical port of entry edge device) and edge destination address (address of physical port of exit edge device) are included. A relay device in the hierarchical network can transfer hierarchical MAC frame by referring to edge destination address of the hierarchical header, and it is possible to make up a VPN exceeding a preset number when using VLAN. This contributes to the improvement of scalability and working efficiency.
[Patent Document 1] JP-A-2003-338836 (Figs. 4 and 9)
[Patent Document 2] JP-A-2004-32006 (Figs. 1, 2, 16 and 17)
[Non-Patent Document 1] TSMMW 2002 (The 4th Topical Symposium on Millimeter Waves), pp. 199-202. .

However, according to the technique described in the Patent Document 1 and the Non-Patent Document 1, fixed VLAN routes are allotted for each subscriber station device, which is an edge device of the access network. As a result, the connection to ISP from the subscriber station device is restricted, and there are problems in that the subscriber terminal connected to a certain subscriber station device cannot freely select the ISP for connection.

Also, according to the technique described in the Patent Document 2, a VLAN route is basically set up between two different user sites. On the other hand, in case of a network configuration, in which frame transmission is carried out via a plurality of VLAN routes (by changing and adding a plurality of VLAN tags one after another), an edge device present at an edge of VLAN on upstream side (ISP side terminal device) cannot acquire information relating to VLAN on downstream side, which is present with a certain VLAN interposed between them. Therefore, the ISP side cannot identify information relating to the subscriber terminal, for instance, and this causes incompleteness and dissatisfaction in providing fair services or in preventing unjust access. Also, in Nomadic environment where VLAN on downstream side can switch over the connection destination to VLAN on upstream side, transmission of frame from ISP on upstream side to VLAN after moving cannot be carried out.

### DISCLOSURE OF THE INVENTION

To solve the above problems, it is an object of the present invention to provide an access network system, a subscriber station device, and a network terminal device, by which it is possible to freely select ISP of connection destination for each subscriber terminal while maintaining various advantages when using VLAN, such as inexpensive and simple arrangement or accomplishment of high-speed communication, to ensure reliable communication between subscriber terminal and ISP, and to cope with Nomadic connection.

To attain the above object, the present invention provides an access network system for making access to a given network by a subscriber terminal, said access network system comprising:
a first network terminal device connected to said given network and terminating a first network for transfer on a layer 2 level;
a second network terminal device able to put said subscriber terminal under control and terminating a second network for transfer on said layer 2 level; and
a subscriber station device for connecting said first and said second networks with each other and terminating each of said first and said second networks, wherein:
   the transmission of the frame is conducted by using a VLAN pass identified by a VLAN tag in said second network, and transmission of said frame added with a frame header including said VLAN tag used in said second network is conducted.

Also, the present invention provides the access network system with above arrangement, wherein, in said first network, transmission of said frame is conducted by using a VLAN pass identified by a VLAN tag different from said VLAN tag used in said second network.

Further, the present invention provides the access network system with the above arrangement, wherein said subscriber station device is so arranged as to generate said VLAN tag used in said second network in response to a request of connection to said given network from said subscriber terminal.

Also, the present invention provides the access network system with above arrangement, wherein MAC addresses of said first network terminal device and said subscriber station device used in said first network are generated according to said VLAN tag used in said first and said second networks, and MAC addresses of said first network terminal device and said subscriber station device are set up to destination MAC address and source MAC address of said frame header.

Further, to attain the above the above object, the present invention provides a subscriber station device included in an access network system where a subscriber terminal makes access to a given network, wherein:
a first network connected to said given network side and for performing transfer of a layer 2 level is connected to a second network connected to said subscriber terminal side and for performing transfer of said layer 2 level, and terminating each of said first and said second networks, said subscriber station device further comprises:
   means for transmission of a frame using a VLAN pass identified by a VLAN tag in said second network; and
   means for adding a frame header including said VLAN tag used in said second network to a frame to be sent to said first network.

Also, the present invention provides the subscriber station device with the above arrangement, wherein said VLAN tag used in said second network is generated in response to a request of connection to said given network from said subscriber terminal.

Further, the present invention provides a network terminal device included in an access network system where a subscriber terminal makes access to a given network, connected to said given network and connected to a first network arranged on said subscriber terminal side, wherein said network terminal device comprises:
means for extracting a VLAN tag from a frame header, said VLAN tag being inserted in said frame header added to the frame received from said first network, said VLAN tag of said second network being added to said frame in a second network passing through before being transferred in said first network; and
storage means for storing by matching said VLAN tag extracted from said frame header with MAC address of said subscriber terminal being set up as destination of said frame.

Also, the present invention provides the network terminal device with the above arrangement, wherein said network terminal device comprises:
means for adding a frame header, including said VLAN tag matched with MAC address of said subscriber terminal and stored, to said frame when a frame addressed to said subscriber terminal is received from said given network side; and
means for sending the frame added with said frame header including said VLAN tag to said first network.

Further, the present invention provides the network terminal device with the above arrangement, wherein a subscriber terminal makes access to a given network and being able to put said subscriber terminal under control, wherein said network terminal device comprises:
means for transmitting information to identify said given network to a subscriber station device where said subscriber terminal passes through when connecting to a given network in case a connection setup information to a given network is received from said subscriber terminal;
means for receiving a VLAN tag corresponding to connection to a given network by said subscriber terminal as a response to information to identify said given network from said subscriber station device;
storage means for storing by matching said VLAN tag with MAC address of said subscriber terminal;
means for adding said VLAN tag being matched with MAC address of said subscriber terminal in said arbitrary frame and stored when an arbitrary frame to be sent from said subscriber terminal to a given network is received; and
means for sending the frame added with said VLAN tag to said subscriber terminal.

The object of the present invention is to provide an access network system, a subscriber station device, and a network terminal device, by which it is possible to freely select ISP of connection destination for each subscriber terminal while maintaining various advantages when using VLAN, such as inexpensive and simple arrangement or accomplishment of high-speed communication, to ensure reliable communication between subscriber terminal and ISP, and to cope with Nomadic connection.

### BRIEF DESCRIPTION OF THE DRAWINGS

Fig. 1 is a drawing to show a network configuration in an embodiment of the present invention;
Fig. 2 is a block diagram to show an example of an arrangement of a subscriber side terminal device in the embodiment of the present invention;
Fig. 3 is a table to show an example of matching information to be stored in matching information storage means of the subscriber side terminal device in the embodiment of the present invention;
Fig. 4 is a block diagram to show an example of an arrangement of a subscriber station device in the embodiment of the present invention;
Fig. 5 is a table to show an example of the matching information to be stored in matching information storage means of the subscriber station device in the embodiment of the present invention;
Fig. 6 is a block diagram to show an example of an arrangement of an ISP side terminal device in the embodiment of the present invention;
Fig. 7 is a table to show an example of the matching information to be stored in the matching information storage means of the ISP side terminal device in the embodiment of the present invention;
Fig. 8 is a table to show an example of a format of a frame to be transmitted between the subscriber side terminal device and the subscriber terminal in the embodiment of the present invention;
Fig. 9 is a table to show an example of a format of a frame to be transmitted between the subscriber station device and a subscriber side terminal device in the embodiment of the present invention;
Fig. 10 is a table to show an example of a format of a frame to be transmitted between the ISP side terminal device and the subscriber station device;
Fig. 11 is a table to show an example of MAC address of the ISP side terminal device to be used only in a first network in the embodiment of the present invention;
Fig. 12 is a table to show an example of MAC address of the subscriber station device to be used only in a first network in the embodiment of the present invention;
Fig. 13 is a table to show an example of a format of a frame to be transmitted between an ISP router and the ISP side terminal device in the embodiment of the present invention;
Fig. 14 is a sequence chart of ISP authentication request in the embodiment of the present invention;
Fig. 15 is a sequence chart of ISP authentication response in the embodiment of the present invention;
Fig. 16 is a sequence chart to show main signal frame transmitting and receiving in the embodiment of the present invention;
Fig. 17 is a drawing to show an example, in which connection is made from a plurality of subscriber terminals under the control of the same subscriber side terminal device to different ISPs in a network configuration in the embodiment of the present invention;
Fig. 18 is a drawing to show an example, in which connection is made from a plurality of subscriber terminals under the control of each of different subscriber side terminal devices to different ISPs in a network configuration in the embodiment of the present invention;
Fig. 19 is a drawing to show a condition before the subscriber side terminal device changes the subscriber station device 7 at connection destination in a network configuration in the embodiment of the present invention; and
Fig. 20 is a drawing to show a condition after the subscriber side terminal device changes the subscriber station device 7 at connection destination in a network configuration in the embodiment of the present invention.

### BEST MODE FOR CARRYING OUT THE INVENTION

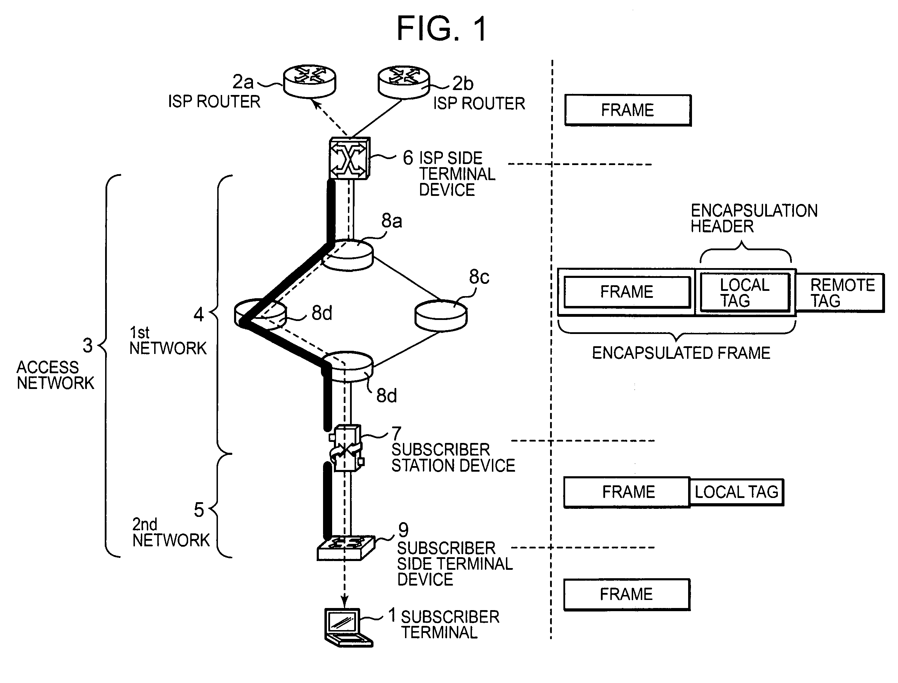

First, description will be given on general features of an embodiment of the present invention referring to Fig. 1. Fig. 1 is a drawing to show an arrangement of a network in an embodiment of the present invention. Fig. 1 shows an aspect of an access network 3 between a subscriber terminal 1 on the subscriber side and ISP routers 2a and 2b on the ISP side. Hereinafter, a side relatively closer to the ISP side may be referred as upstream side and a side relatively closer to the subscriber may be referred as downstream side.

The access network 3 comprises a first network 4 and a second network 5 for carrying out transfer at a layer 2 level, and communication between the subscriber and the ISP is performed via the first network 4 and the second network 5. Here, the communication is performed via two networks, i.e. the first network 4 and the second network 5, while the communication may be made via more number of networks. Also in the second network 5, a relay station device may be present between a subscriber side terminal device 9 and a subscriber station device 7, and a mere wired link or a wireless link may be used between the subscriber side terminal device 9 and the subscriber station device 7. In the present specification, a network between the subscriber side terminal device 9 and the subscriber station device 7 is referred as the second network 5 for convenience even in case a relay station device is present between the subscriber side terminal device 9 and the subscriber station device 7 or in case these are connected by a mere link. Specifically, it is understood that a link connection is also included in the term "the second network 5" in addition to the so-called network connection.

In Fig. 1, an ISP side terminal device 6 is provided as an edge device on upstream side and the subscriber station device 7 is provided as an edge device on downstream side in the first network 4. Further, a plurality of relay station devices 8a - 8d are arranged between the ISP side terminal device 6 and the subscriber station device 7. In Fig. 1, one each of the ISP side terminal device 6 and the subscriber station device 7 is shown, while there may be two or more of these devices. Similarly, four relay station devices 8a - 8d are shown in Fig. 1, while there may be provided any number of relay station devices as desired.

Also, in Fig. 1, the subscriber station device 7 is arranged as an edge device on upstream side and the subscriber side terminal device 9 is arranged as an edge device on downstream side in the second network 5. Further, a plurality of relay station devices 8a - 8d are provided between the ISP side terminal device 6 and the subscriber station device 7. As described above, the subscriber station device 7 acts as an edge device on upstream side of the second network 5 and also as an edge device on downstream side of the first network 4. Namely, the subscriber station device 7 plays a role of a connection point between the first network 4 and the second network 5.

Fig. 1 shows how a single subscriber side terminal device 9 is connected to a single subscriber station device 7, while it is possible to connect a plurality of subscriber side terminal devices 9 to a single subscriber station device 7. Also, in Fig. 1, it is shown as if the subscriber station 7 is directly connected with the subscriber side terminal device 9. However, similarly to the case of the first network 4, it is possible to arrange any number of relay station devices as desired between the subscriber station device 7 and the subscriber side terminal device 9. For example, the subscriber station device 7 is a device to accommodate a plurality of subscriber side terminal devices 9 existing in a building, and the subscriber side terminal device 9 is a device to accommodate a plurality of subscriber terminals 1 existing on each floor within the building.

Further, the first network 4 is made up by VLAN between L2 switches. Specifically, in the first network 4, a VLAN pass is built up between L2 switches by using a remote tag in advance between the edge device on upstream side and the edge device on downstream side, and frame transfer is conducted so that the frame flows through a predetermined pass by using a VLAN tag added to the frame. In the first network 4, a VLAN tag to be added to the frame is referred as a remote tag. In the first network 4, a plurality of redundant routes can be built up between the same edge devices. This redundant route may be used as an alternative route or may be used for the control of load balance and QoS (Quality of Service) policy.

By normal procedure using the conventional technique, it is not easy for the ISP side terminal device 6 to identify the information present on a side more downstream than the subscriber station device 7 (e.g. information of the link in the second network 5 or information relating to the subscriber terminal 1). However, according to the present invention, as shown in the right side of Fig. 1 it is possible to encapsulate the frame transmitted from downstream side to upstream side as it is transmitted from the subscriber to ISP within the first network 4, and by inserting a local tag in the second network 5 with the encapsulation header, the ISP side terminal device 6 can identify the information, which is present on more downstream side than the subscriber station device 7. Hereinafter, the VLAN tag added to the frame within the second network 5 is referred as "a local tag".

Specifically, as shown in Fig. 1, it is so arranged that an encapsulation header can be added, in which a local tag in the second network 5 relating to the subscriber terminal 1, serving as destination or source, is inserted in the frame transmitted in the first network 4 (in particular, a frame from downstream to upstream). As a result, it is possible, for instance, that a local tag added at the second network 5 is transmitted together with the frame in the first network 4 and the ISP side terminal device 6 can acquire the local tag added in the second network 5.

Because the ISP side terminal device 6 can acquire the local tag added in the second network 5, various effects can be provided. For example, upon receipt of the encapsulated frame flowing from upstream to downstream within the first network 4, the subscriber station device can send the frame added with an adequate local tag to the second network 5 by merely analyzing the information in the encapsulation header. In so doing, it is possible to alleviate the burden of the processing by the subscriber station device 7.

Also, by using two VIDs (remote tag and local tag) on the matching information for mapping, the ISP side terminal device 6 can specify the subscriber terminal 1 connected to the subscriber side terminal device 9, and the number of the subscriber terminals 1 receiving the service can be identified on the ISP side. This can be made possible from the following reasons: The ISP side terminal device 6 can specify the subscriber station device 7 from the remote tag. From the local tag used by the subscriber station device 7 thus specified, the subscriber side terminal device 9 can be specified. Because MAC address of the subscriber terminal 1 is also stored in the ISP side terminal device 6, the mapping with different MAC addresses shows that different subscriber terminals 1 (a plurality of subscriber terminals 1) are connected to a single subscriber side terminal device 9 despite of the fact that the remote tag and the local tag are the same. As a result, the ISP side terminal device 6 can identify the number of subscriber terminals 1 connected to the subscriber side terminal device 9.

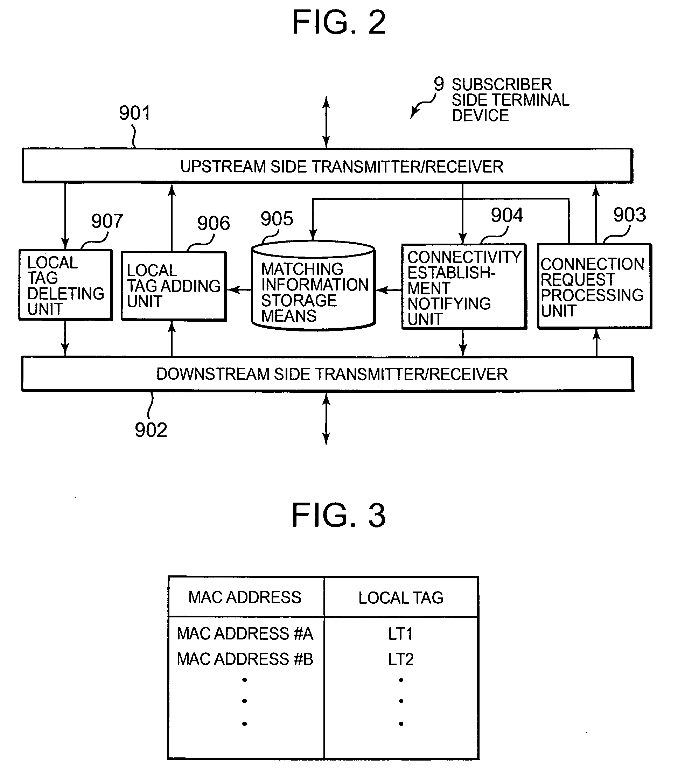

In the above, description has been given on general features of the embodiment of the present invention. Next, description will be given on the details of the embodiment of the invention. Referring to Fig. 2 to Fig. 7, description will be given on an arrangement of the ISP side terminal device 6, the subscriber station device 7, and the subscriber side terminal device 9.

Fig. 2 is a block diagram to show an example of an arrangement of the subscriber side terminal device in the embodiment of the present invention. The subscriber side terminal device 9 comprises an upstream side transmitter/ receiver 901, a downstream side transmitter/receiver 902, a connection request processing unit 903, a connectivity establishment notifying unit 904, a matching information storage means 905, a local tag adding unit 906, and a local tag deleting unit 907. Among these, the connection request processing unit 903 and the connectivity establishment notifying unit 904 are the component elements necessary for the authentication processing as described later.

The upstream side transmitter/receiver 901 is an interface, which enables transmitting and receiving of the frame to and from the second network 5, and the downstream side transmitter/receiver 902 is an interface, which enables transmitting and receiving of the frame to and from the subscriber. In Fig. 2, to facilitate the explanation, the interface to transmit and receive the frame is divided to the upstream side transmitter/receiver 901 and the downstream side transmitter/receiver 902, while the upstream side transmitter/receiver 901 and the downstream side transmitter/receiver 902 can be provided by the same interface. Also, the upstream side transmitter/receiver 901 and the downstream side transmitter/receiver 902 comprise a plurality of input/output ports. For instance, these have also the functions such as supervision of input port or control of output port to enable the adding of adequate local tag. Here, it is understood that these functions are included in the upstream side transmitter/ receiver 901 and the downstream side transmitter/receiver 902, and the details are not shown in the figure.

The connection request processing unit 903 is the means for performing the processing of information relating to the setting of connection to ISP to be received from the subscriber terminal 1 when the subscriber terminal 1 requests authentication to ISP. For instance, when the connection request processing unit 903 receives information relating the setting of connection from the subscriber terminal 1 to ISP, MAC address of the subscriber terminal 1, transmitting the connection setting to ISP, is outputted to the matching information storage means 905, and the connection setting to ISP received from the subscriber terminal 1 is transmitted to the subscriber station device 7 as a connection request to ISP.

The connectivity establishment notifying unit 904 is the means to perform the processing on the local tag allotted by the subscriber station device 7 according to the connection request to ISP. For instance, when a notification of the local tag allotted by the subscriber station device 7 according to the connection request to ISP is received, the local tag is outputted to the matching information storage means 905, and it is notified to the subscriber terminal 1 that the connectivity with the subscriber station device 7 has been established.

Also, the matching information storage means 905 is information storage medium to store the matching information to indicate the matching relation between the MAC address of the subscriber terminal 1 and the local tag. Specifically, as shown in Fig. 3, for example, according to MAC address of the subscriber terminal 1 to transmit the connection setting to ISP and to connection request to the ISP to correspond to the connection setting to ISP, the matching relation with the local tag allotted by the subscriber station device 7 is stored in the matching information storage means 905 as the matching information. In Fig. 3, the matching of MAC address of the subscriber terminal 1 [MAC address #A] and the local tag [LT1] and the matching of MAC address of the subscriber terminal 1 [MAC address #B] and the local tag [LT2] are schematically shown in the condition stored as the matching information.

The local tag adding unit 906 is the means for referring the matching relation stored in the matching information storage means 905 and for transmitting it by adding an adequate local tag to a frame received from downstream side so that the transfer by VLAN tag can be conducted in the second network 5 on upstream side. The local tag deleting means 907 is the means for deleting the local tag of the frame transmitted with the local tag and for transmitting the frame after deleting the local tag to the subscriber terminal 1 on downstream side.

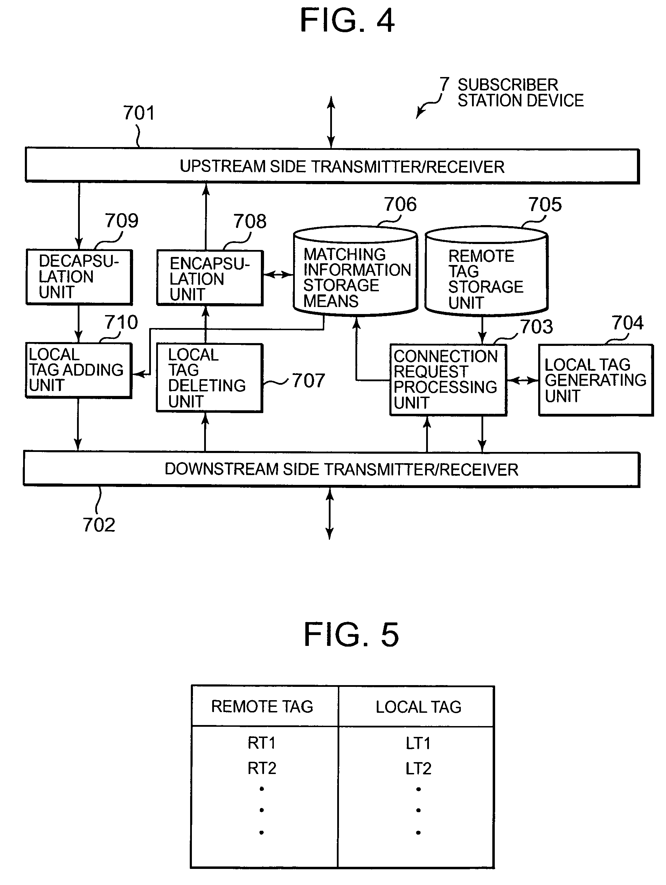

Fig. 4 is a block diagram to show an example of an arrangement of the subscriber station device in the embodiment of the present invention. The subscriber station device 7 comprises an upstream side transmitter/receiver 701, a downstream side transmitter/receiver 702, a connection request processing unit 703, a local tag generating unit 704, a remote tag storage unit 705, a matching information storage means 706 a local tag deleting unit 707, an encapsulation unit 708, a decapsulation unit 709, and a local tag adding unit 710. The connection request processing unit 703 and the local tag generating unit 704 are the component elements necessary only for the authentication processing as described later.

The upstream side transmitter/receiver 701 is an interface, which enables transmitting and receiving of the frame to and from the first network 4, and the downstream side transmitter/receiver 702 is an interface, which enables transmitting and receiving of the frame to and from the second network 5. In Fig. 4, to facilitate the explanation, the interface to transmit and receive the frame is divided to the upstream side transmitter/receiver 701 and the downstream side transmitter/receiver 702, while the upstream side transmitter/receiver 701 and the downstream side transmitter/receiver 702 can be provided by the same interface. Also, the upstream side transmitter/receiver 701 and the downstream side transmitter/receiver 702 are made up together by a plurality of input/output ports and have the functions such as supervision of input port or control of output port for adding of the adequate local tag. Here, it is understood that these functions are included in the upstream side transmitter/receiver 701 and the downstream side transmitter/receiver 702, and the details are not shown in the figure.

The connection request processing unit 703 is the means for performing processing of information relating to connection setting to ISP received from the subscriber side terminal device 9 when the subscriber terminal 1 requests authentication to ISP. For instance, when the connection request processing unit 703 receives information relating to the connection request to ISP from the subscriber side terminal device 9, a request for local tag generation is given to the local tag generating unit 704, and a local tag specific for the request of connection to ISP is acquired, and the local tag is notified to the subscriber side terminal device 9. Further, based on the connection request to ISP, the subscriber terminal 1 specifies the ISP, to which connection is desired. A pass in the first network 4 to connect to ISP (a pass identified by the remote tag) is found. A remote tag to identify this pass is matched with a local tag generated at the local tag generating unit 704, and this is stored in the matching information storage means 706.

The local tag generating unit 704 is the means for generating the local tag when a request of local tag generation is received from the connection request processing unit 703. It is desirable that different values are set for each connection request to ISP by the subscriber terminal 1 on the local tag. For instance, the subscriber station device 7 can create random numbers and can generate the local tag at random according to the random numbers.

The remote tag storage unit 705 is information storage medium where remote tags to specify the pass determined in advance in the first network 4 are stored. In the first network 4, each of the relay station devices 8a - 8d is so arranged that transfer processing is performed according to the remote tag added to the frame, and the remote tag is set in advance through matching with the pass between the ISP side terminal device 6 and the subscriber station device 7.

The matching information storage means 706 is information storage medium for storing the matching relation between the remote tag relating to the pass up to the ISP side terminal device 6 existing on a route to ISP, to which the subscriber terminal 1 wants the connection, and the local tag generated by the local tag generating unit 704. For instance, Fig. 5 is a schematical drawing of the matching information in the matching information storage means 706. In Fig. 5, the matching between the remote tag [RT1] and the local tag [LT1] and the matching between the remote tag [RT2] and the local tag [LT2] are stored as the matching information.

The local tag deleting unit 707 is the means for deleting a local tag of a frame transferred with the local tag in the second network 5 on downstream side. The encapsulation unit 708 is the means for adding a frame header (encapsulation header) generated from the matching information of the remote tag and the local tag accommodated in the matching information storage means 706 to the frame whose local tag has been deleted by the local tag deleting unit 707. At the encapsulation unit 708, the processing to add the remote tag (for transfer in the first network 4) to the frame is also performed, and the frame encapsulated and added with a remote tag is sent to the first network 4 on upstream side via the upstream side transmitter/receiver 701.

The decapsulation unit 709 is the means for carrying out the processing to remove the encapsulation header of the encapsulated frame received from the first network 4 on upstream side. The local tag adding unit 710 is the means for adding an adequate local tag to the frame so that the frame can be transferred in the second network 5 on downstream side. By acquiring information of the remote tag inserted in the encapsulation header from the decapsulation unit 709 and by referring to the matching information stored in the matching information storage means 706, the local tag adding unit 710 can acquire and add an adequate local tag to the frame. Because the information of the local tag is included in the encapsulation header removed at the decapsulation unit 709, the local tag adding unit 710 can also acquire the information of the local tag in the encapsulation header in the decapsulation unit 709 and can add this local tag to the frame. In particular, the acquisition of the information of the local tag in the encapsulation header and addition of the local tag to the frame alleviate the burden of the processing of the subscriber station device 7. Also, the extraction of the local tag from the encapsulation header and the addition of it to the frame are effective in case there are a multiple of local tags (e.g. a multiple of the subscriber terminals 1) and a plurality of local tags are set in overlapping to a single remote tag.

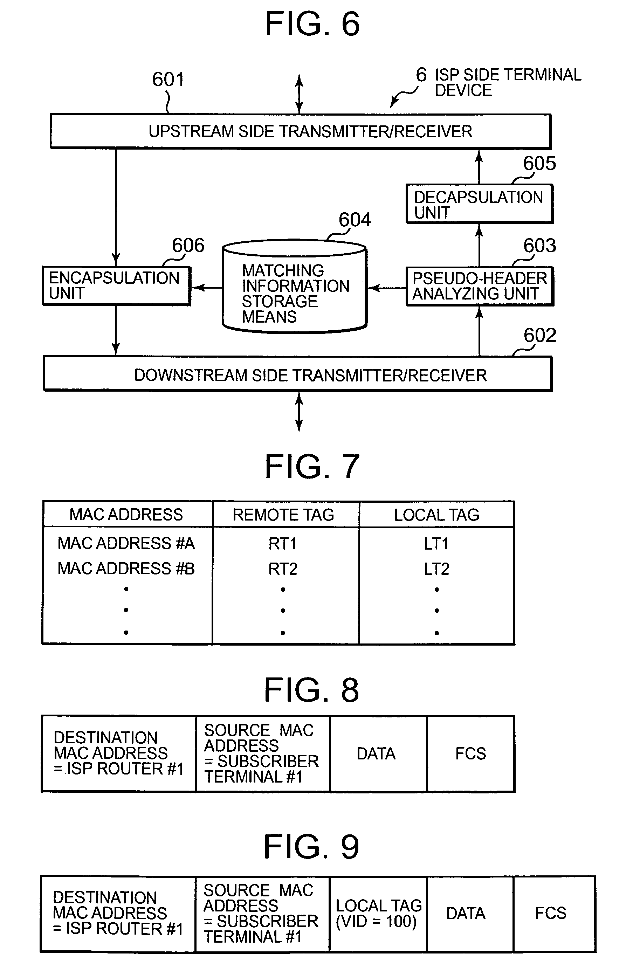

Fig. 6 is a block diagram to show an example of an arrangement of an ISP side terminal device in the embodiment of the present invention. The ISP side terminal device 6 comprises an upstream side transmitter/receiver 601, a downstream side transmitter/receiver 602, a pseudo-header analyzing unit 603, a matching information storage means 604, a decapsulation unit 605, and an encapsulation unit 606. Although not shown in the figure, similarly to the case of the subscriber station device 7, the ISP side terminal device 6 may have a remote tag storage unit where information of the pass in the first network 4 (information of the remote tag) is stored in advance.

The upstream side transmitter/receiver 601 is an interface, which enables transmitting and receiving of the frame to and from the ISP side, and the downstream side transmitter/receiver 602 is an interface, which enables transmitting and receiving of the frame to and from the first network 4. To facilitate the explanation, the interface to transmit and receive the frame is divided to the upstream side transmitter/receiver 601 and the downstream side transmitter/receiver 602 in Fig. 6, while the upstream side transmitter/receiver 601 and the downstream side transmitter/receiver 602 can be provided by the same interface. The upstream side transmitter/receiver 601 and the downstream side transmitter/receiver 602 comprise a plurality of input/output ports. For instance, these have the functions such as supervision of input port for adding adequate local tag or control of output port. Here, it is understood that these functions are included in the upstream side transmitter/receiver 601 and the downstream side transmitter/receiver 602, and the details are not shown in the figure.

The pseudo-header analyzing unit 603 is the means for analyzing the encapsulation header when an encapsulated frame is received from the first network 4. When a frame relating to an encapsulated ISP authentication request is received from the first network 4 in the authentication processing, for instance, the pseudo-header analyzing unit 603 acquires information on the local tag and the remote tag from the encapsulation header and further acquires MAC address of the subscriber terminal 1. By matching these types of information with each other, these can be outputted to the matching information storage means 604. Also, the pseudo-header analyzing unit 603 outputs the encapsulated frame to the decapsulation unit 605. After the encapsulation header is removed at the decapsulation unit 605, the encapsulated frame is sent to the ISP side via the upstream side transmitter/receiver 601.

The matching information storage means 604 is information storage medium for storing the matching information to indicate the matching relation of MAC address, the remote tag and the local tag of the subscriber terminal 1 supplied from the pseudo-header analyzing unit 603. For instance, Fig. 7 schematically shows the matching information in the matching information storage means 604. In Fig. 7, the matching of [MAC address #A] (i.e. MAC address of the subscriber terminal 1), the remote tag [RT1] and the local tag [LT1], and the matching of [MAC address #B] (i.e. MAC address of the subscriber terminal 1), the remote tag [RT2], and the local tag [LT2], are shown as these are stored as the matching information.

The decapsulation unit 605 is the means for removing the encapsulation header of the encapsulated frame received from the first network 4 such as a frame relating to ISP authentication request or a main signal frame and for generating the frame to send to the ISP side. The encapsulation unit 606 is the means for adding the encapsulation header including the remote tag and the local tag having the matching relation with MAC address of the subscriber terminal 1 to the frame based on the matching information stored in the matching information storage means 604 by referring to MAC address of destination of the frame (MAC address of the subscriber terminal 1) when the frame is received from the ISP side (upstream side). In the encapsulation unit 606, a remote tag for transfer in the first network 4 is added to the encapsulated frame, and the encapsulated frame added with the remote tag is sent to the first network 4 on downstream side via the downstream side transmitter/receiver 602.

Next, concrete description will be given on an example of a format of a frame to be transmitted between the subscriber side and the ISP side. Fig. 8 shows an example of a format of a frame to be transmitted between the subscriber side terminal device and the subscriber terminal in the embodiment of the present invention. As shown in Fig. 8, the frame to be transmitted between the subscriber side terminal device 9 and the subscriber terminal 1 has a format of destination MAC address, source MAC address, data, and FCS (Frame Check Sequence). The frame shown in Fig. 8 has the same format as the standard frame format. Hereinafter, it is called "an original frame". In Fig. 8, a format of a frame to be transmitted from the subscriber terminal 1 to the subscriber side terminal device 9 is shown, in which "ISP router #1" is set up as the destination MAC address and "subscriber terminal #1" is set up as the source MAC address, while it is the same in the format of the frame to be transmitted from the subscriber side terminal device 9 to the subscriber terminal 1. In the latter case, MAC address of the subscriber terminal 1 is set up as the destination MAC address, and MAC address of the ISP routers 2a and 2b is set up as the source MAC address.

Fig. 9 shows an example of a format of a frame to be transmitted between the subscriber station device and the subscriber side terminal device in the embodiment of the present invention. As shown in Fig. 9, the frame to be transmitted between the subscriber station device 7 and the subscriber side terminal device 9 has the format of destination MAC address, source MAC address, local tag (e.g. VID = 100), data, and FCS. This is the same as the format of the frame in the standard VLAN, and frame transmission based on the local tag is performed in the second network 5. In Fig. 9, a format of a frame is shown, which is transmitted from the subscriber station device 7 to the subscriber side terminal device 9, in which "ISP router #1" is set up as the destination MAC address and "subscriber terminal #1" is set up as the source MAC address, while the format of the frame to be transmitted from the subscriber side terminal device 9 to the subscriber station device 7 is the same. In the latter case, MAC address of the subscriber station device 7 is set up as the destination MAC address, and MAC address of the subscriber side terminal device 9 is set up as the source MAC address.

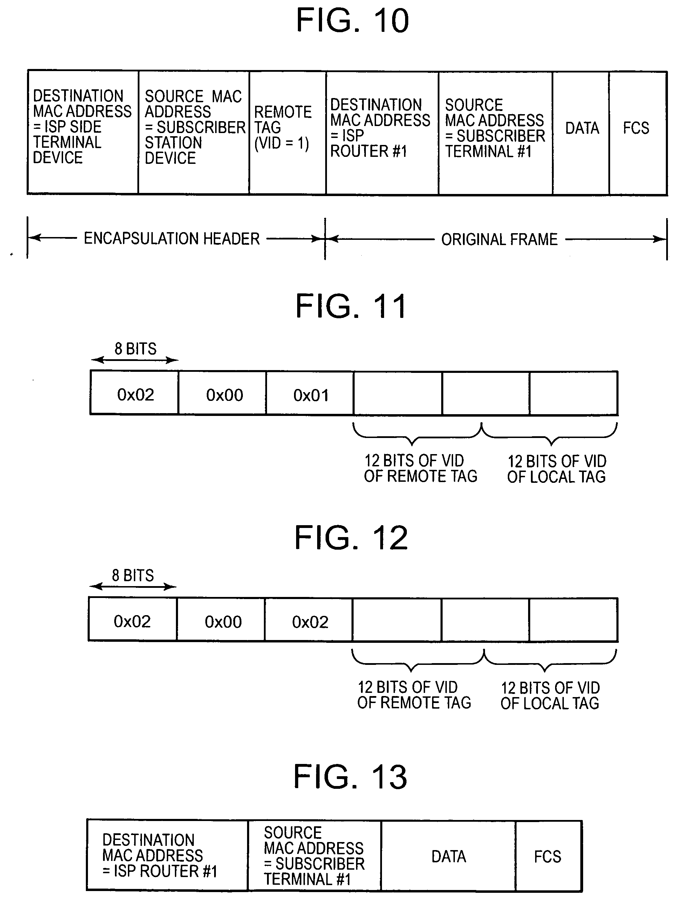

Fig. 10 shows an example of a format of a frame to be transmitted between the ISP side terminal device and the subscriber station device in the embodiment of the present invention. As shown in Fig. 10, the frame to be transmitted between the ISP side terminal device 6 and the subscriber station device 7 has a format, in which an expanded frame header (encapsulation header) is added to the original frame as shown in Fig. 8. This encapsulation header has a format of the destination MAC address, the source MAC address, and remote tag (e.g. VID = 1), and frame transmission based on the remote tag is performed in the first network 4.

This encapsulation header is preferably a frame header in accordance with a standard Ethernet (registered trademark) frame header. As a result, the relay station devices 8a - 8d within the first network 4 to transmit the encapsulated frame can simply perform the processing of VLAN frame with a standard tag. Thus, the relay station devices 8a - 8d to be arranged in the first network 4 can be made up by the devices, which are used for conventional processing.

Fig. 10 shows a format of a frame to be transmitted from the ISP side terminal device 6 to the subscriber station device 7, in which "the ISP side terminal device" is set up as destination MAC address of the encapsulation header and "the subscriber station device" is set up as source MAC address. The same applies to the format of the frame to be transmitted from the subscriber station device 7 to the ISP side terminal device 6. In this case, MAC address of the subscriber station device 7 is set up as the destination MAC address, and MAC address of the ISP side terminal device 6 is set up as the source MAC address.

Also, as MAC address of the ISP side terminal device 6 and the subscriber station device 7 to be set up as the destination MAC address and the source MAC address to the encapsulation header as shown in Fig. 10, unique MAC address (private address) to be used only in the first network 4 can be used. Description will be given below on MAC address of the ISP side terminal device 6 and the subscriber station device 7 referring to Fig. 11 and Fig. 12.

Fig. 11 shows an example of MAC address of the ISP side terminal device used only in the first network in the embodiment of the present invention. For instance, as shown in Fig. 11, the ISP side terminal device 6 to be used only in the first network 4 has 48 bits similarly to normal MAC address. In the foremost 8 bits, a value "0x02" showing a private address is set up. In the next 2 octets, arbitrary values (such as "0x00", "0x01") are set up. In the subsequent 12 bits, 12 bits of VID of the remote tag are set up. As the final 12 bits, 12 bits of VID of the local tag are set up.

On the other hand, Fig. 12 shows an example of MAC address of a subscriber station device to be used only in the first network in the embodiment of the present invention. For instance, as shown in Fig. 12, the address of a subscriber station device 7 to be used only in the first network 4 has 48 bits. In the foremost 8 bits, a value of "0x02" to indicate a private address is set up, and arbitrary values (such as "0x00" or "0x02") are set up in the subsequent two octets. Also, 12 bits of VID of the remote tag is set up in the subsequent 12 bits, and 12 bits of VID of the local tag are set up in the final 12 bits.

As it is evident when it is referred to the private address of the ISP side terminal device 6 and the subscriber station device 7 as shown in Fig. 11 and Fig. 12, both the remote tag and the local tag are used in the private address of the ISP side terminal device 6 and the subscriber station device 7, and the remote tag and the local tag are inserted as MAC addresses in the encapsulation header. Also, it is possible to identify the ISP side terminal device 6 and the subscriber station device 7 only when the values of the two octets are different.

Fig. 13 shows a format of a frame to be transmitted between the ISP router and the ISP side terminal device in the embodiment of the present invention. As shown in Fig. 13, the frame transmitted between the ISP routers 2a and 2b and the ISP side terminal device 6 is the same as the original frame shown in Fig. 8.

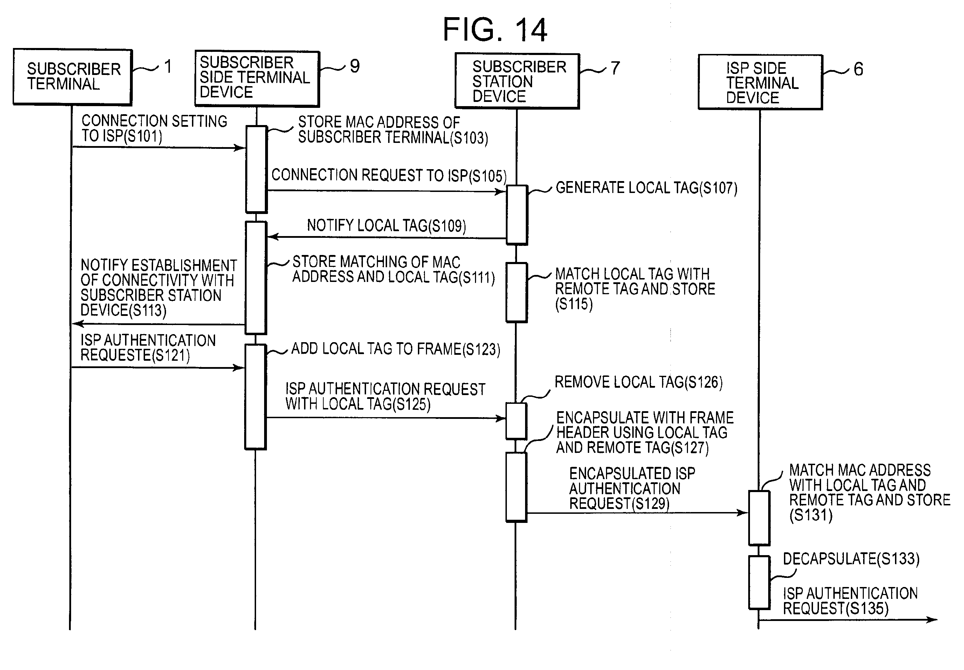

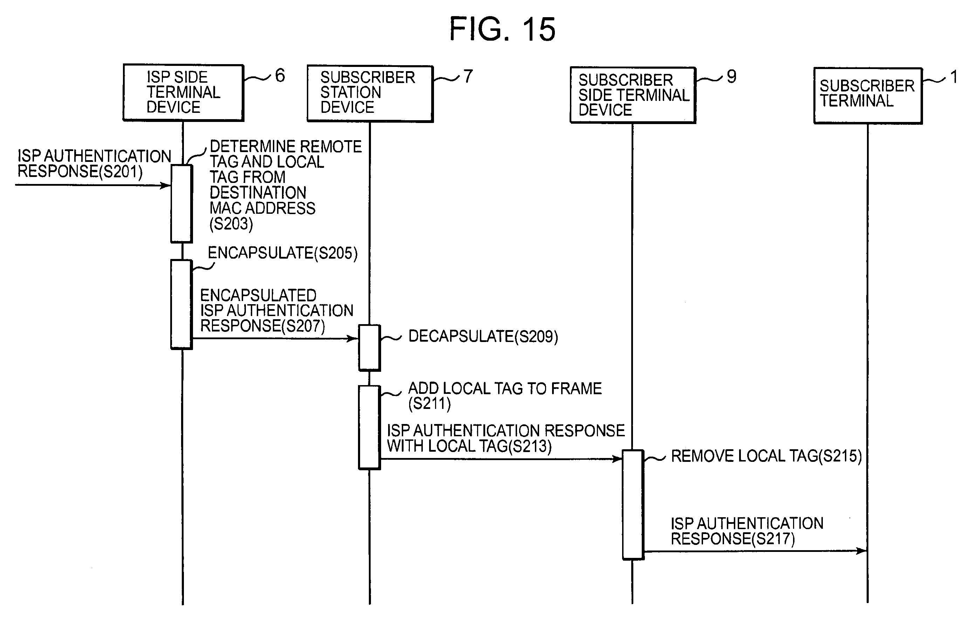

Next, description will be given on the details of processing when communication is performed by using the above arrangement and the frame format in the network configuration shown in Fig. 1. In order that the subscriber terminal 1 performs communication with an external network such as Internet via ISP (i.e. transmitting and receiving of main signal frame), authentication processing must be performed so that the subscriber terminal 1 receives authentication from ISP. Now, description will be given below on this authentication processing, referring to Figs. 14 and 15.

Fig. 14 is a sequence chart of ISP authentication request in the embodiment of the present invention. Here, description will be given on authentication processing when the subscriber terminal 1 is newly connected to the subscriber side terminal device 9, and the subscriber terminal 1 requests connection to an external network such as Internet via the ISP as desired.

In Fig. 14, to the subscriber side terminal device 9, the subscriber terminal 1 performs connection setting to ISP (e.g. transmission of information to identify ISP, to which it is wanted to connect) (Step 5101). The subscriber side terminal device 9 receives connection setting to ISP from the subscriber terminal 1, and MAC address of the subscriber terminal 1 transmitting the connection setting (e.g. referring to source MAC address, which is set up in the frame relating to connection setting) is stored (Step S103). The storage of MAC address in this Step S103 is only temporary, and MAC address is maintained at least up to the completion of the processing of Step S111 as described later.

Then, the subscriber side terminal device 9 transmits a request of connection to the ISP relating to the subscriber terminal 1 to the subscriber station device 7 (Step S105). The request of connection to ISP to be transmitted in this Step S105 is a processing to notify from the subscriber side terminal device 9 to the subscriber station device 7 that the subscriber terminal 1 to request the connection to a specific ISP is present under the control and that allotment of the local tag is requested to this subscriber terminal 1.

The subscriber station device 7 receives the request of connection to ISP from the subscriber side terminal device 9. For instance, a random number is generated, and a new local tag including the random number is generated (Step S107), and this local tag is notified to the subscriber side terminal device 9 (Step S109). This local tag is a VLAN tag in the second network 5. It is desirable that it is newly generated each time the subscriber terminal 1 wants to make connection to the ISP as desired. Specifically, it is desirable that the local tag is generated each time the subscriber terminal 1 establishes connection with the ISP.

Upon receipt of the notification of the local tag from the subscriber station device 7 by the subscriber side terminal device 9, the matching of MAC address of the subscriber terminal 1 stored in Step S103 with the local tag is stored in the matching information storage means 905 (Step S111), and it is notified to the subscriber terminal 1 that the connectivity with the subscriber station device 7 has been established (Step S113).

Also, the subscriber station device 7 specifies the ISP, to which the subscriber terminal 1 is trying to make connection by referring to the request of connection to the ISP from the subscriber side terminal device 9. Then, a remote tag (a VLAN tag in the first network 4) is acquired, which determines a pass as set up in advance in the pass to the ISP side terminal device 6, which enables the connection to the ISP (a pass set up in advance in the first network 4). Then, the subscriber station device 7 performs the matching of the local tag generated in Step S107 with the remote tag to determine the pass to the ISP side terminal device 6 relating to ISP, to which the subscriber terminal is trying to make connection. By storing the matching in the matching information storage means 706, the matching relation is stored (Step S115).

By the processing as described in the Steps S101 - S115, the pass relating to the subscriber terminal 1 (the pass specified by the local tag) is established between the subscriber station device 7 and the subscriber side terminal device 9 when there is a subscriber terminal 1, which newly tries to make connection to ISP under the control of the subscriber side terminal device 9.

Next, after confirming the establishment of the connectivity with the subscriber station device 7 in Step S113, the subscriber terminal 1 requests ISP authentication (e.g. transmission of authentication information to establish the connectivity with ISO, to which it wants to make connection) to the subscriber side terminal device 9 (Step S121).

The subscriber side terminal device 9 receives ISP authentication request from the subscriber terminal 1 and acquires a corresponding local tag from MAC address of the subscriber terminal 1 by referring to the matching information storage means 905. After adding this local tag to the frame relating to the ISP authentication request (Step S123), the ISP authentication request with the local tag is transmitted to the subscriber station device 7 (Step S125). In this case, the format of the frame flowing from the subscriber side terminal device 9 to the subscriber station device 7 in Step S125 is the one as shown in Fig. 9, for instance.

Upon receipt of the ISP authentication request with the local tag from the subscriber side terminal device 9, the subscriber station device 7 removes the local tag for transmission in the second network 5 from the received frame (Step S126). Then, by referring to the matching relation between the local tag and the remote tag in the matching information storage means 706 stored in Step S115, encapsulation of the frame is performed after the local tag is removed by the frame header (encapsulation header) using the local tag and the remote tag (Step S127). Then, the encapsulated ISP authentication request is transmitted to the ISP side terminal device 6 (Step S129). The subscriber station device 7 generates and stores the encapsulation header from the local tag and the remote tag in advance, and the encapsulation header stored in advance may be added at the encapsulation of the frame. Also, the encapsulation header using the local tag and the remote tag may be generated in response to the receiving of the frame. In this case, the format of the frame flowing from the subscriber station device 7 to the ISP side terminal device 6 in Step S125 is the one shown in Fig. 10, for instance.

Upon receipt of the encapsulated ISP authentication request from the subscriber station device 7, the ISP side terminal device 6 performs the matching of the MAC address, the local tag, and the remote tag of the subscriber terminal 1 inserted in the encapsulation header. By storing this in the matching information storage means 604, the matching relation is stored (Step S131). Then, the encapsulated frame is decapsulated (Step S133), and the frame after decapsulation (the same as the frame transmitted to the subscriber side terminal device from the subscriber terminal 1) is transmitted toward a management network (a predetermined ISP router 2a) of the predetermined ISP (Step S135).

By the processing of Steps S121 - S135, the ISP side terminal device 6 can receive ISP authentication request from the subscriber terminal 1 and can acquire and maintain the local tag, which can identify the pass relating to the subscriber terminal 1 in the second network 5. Also, by arranging that the local tag is generated each time the connection request is made to ISP of the subscriber terminal 1, the ISP side terminal device 6 can specify the subscriber side terminal device 9, which places a predetermined subscriber terminal 1 under control or can identify the number of the subscriber terminals 1 connected to the ISP. Here, it is so arranged that the local tag is allotted when authentication request is sent from the subscriber terminal 1 to the ISP, while it can also be so arranged that the local tags are allotted in response to arbitrary information from the subscriber terminal 1.

Next, description will be given on the processing in case authentication processing is performed on the ISP side in response to the authentication request as shown in Fig. 14 and the result of authentication is sent to the subscriber from the ISP side by referring to Fig. 15. Fig. 15 is a sequence chart of ISP authentication response in the embodiment of the present invention.

After authentication processing is performed by an ISP authentication server (not shown) upon receipt of the ISP authentication request as sent in Step S135 of Fig. 14, the result of the authentication is sent to the ISP side terminal device 6 as a response of the ISP authentication (Step S201). The ISP side terminal device 6 receives the ISP authentication response from the ISP router 2a on the ISP side. By referring to the matching relation of the MAC address, the local tag, and the remote tag in the matching information storage means 604 (matching information stored in Step S115 of Fig. 14), the matching of the remote tag and the local tag is determined from the destination MAC address of the frame relating to the ISP authentication response (MAC address of the subscriber terminal 1) (Step S203). By the frame header (encapsulation header) using the local tag and the remote tag determined in Step S203, the ISP side terminal device 6 performs encapsulation of the frame relating to the ISP authentication response (Step S205), and the encapsulated ISP authentication response is transmitted to the subscriber station device 7 (Step S207).

It may be so arranged that the ISP side terminal device 6 generates and stores the encapsulation header in advance from the local tag and the remote tag, and the encapsulation header stored in advance is added in case of the frame encapsulation. Also, it may be so arranged that the encapsulation header using the local tag and the remote tag is generated in response to the receiving of the frame. In this case, the format of the frame flowing from the ISP side terminal device 6 to the subscriber station device 7 in Step S207 is the one as shown in Fig. 10, for instance.

Upon receipt of the encapsulated ISP authentication response from the ISP side terminal device 6, the subscriber station device 7 performs decapsulation of the encapsulated frame (Step S209). Then, the local tag to match the subscriber terminal 1 is added to the decapsulated frame (Step S211), and an ISP authentication response with local tag is transmitted to the subscriber side terminal device 9 (Step S213). By referring to the matching information stored in the matching information storage means 706, the subscriber station device 7 can also acquire the local tag to be added to the decapsulated frame. By analyzing the encapsulation header added to the encapsulated frame thus received, it is also possible to acquire the local tag to be added to the frame after decapsulation. In this case, the format of the frame flowing from the subscriber station device 7 to the subscriber side terminal device 9 in Step S213 is the one shown in Fig. 9, for instance.

Upon receipt of the ISP authentication response with local tag from the subscriber station device 7, the subscriber side terminal device 9 removes the local tag for transfer in the second network 5 from the received frame (Step S215) and transmits the frame after removing the local tag (the same as the frame transmitted from the ISP router 2a to the ISP side terminal device 6) to the subscriber terminal 1 as set at destination of the ISP authentication response (Step S217).

By the processing of Steps S201 - S217, it is possible for the ISP side terminal device 6 to transmit the ISP authentication response while reliably identifying the subscriber terminal 1, to which the ISP authentication response should be transmitted (i.e. the subscriber terminal 1, to which the ISP authentication request has been transmitted). Also, by analyzing the encapsulation header added to the encapsulated frame thus received, the subscriber station device 7 can also acquire the local tag to be added to the frame after decapsulation. In this case, the burden of the processing of the subscriber station device 7 can be extensively alleviated in comparison with the case where the processing to specify the local tag is performed by referring to the matching information stored in the matching information storage means 706.

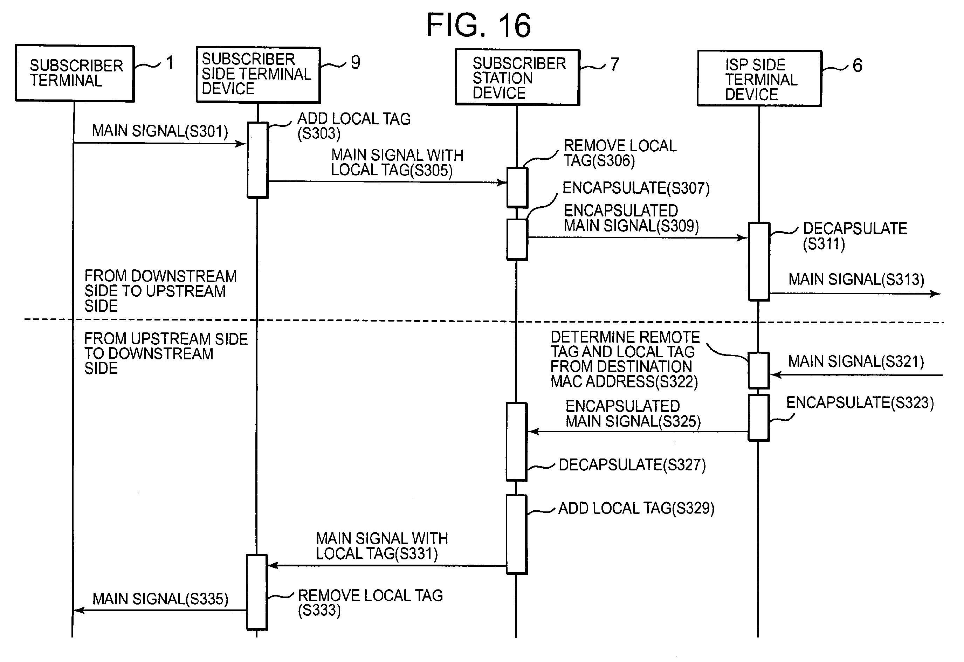

Next, description will be given on the processing in the case where the authentication processing is performed on the ISP side in response to the authentication processing shown in Fig. 14 and Fig. 15, and the result of the authentication is sent to the subscriber from the ISP side by referring to Fig. 16. Fig. 16 is a sequence chart of main signal frame transmitting/receiving in the embodiment of the present invention.

When the authentication processing to the ISP has been successfully performed and connection can be made to an external network such as Internet via ISP, the subscriber terminal 1 transmits a main signal to the subscriber side terminal device 9 (Step S301). The subscriber side terminal device 9 receives the main signal from the subscriber terminal 1 and acquires a matching local tag from MAC address of the subscriber terminal 1 by referring to the matching information storage means 905. After adding this local tag to the main signal frame (Step S303), the main signal with local tag is transmitted to the subscriber station device 7 (Step S305). In this case, the format of the main signal frame flowing from the subscriber side terminal device 9 to the subscriber station device 7 in Step S303 is the one shown in Fig. 9, for instance.

Upon receipt of the main signal with local tag from the subscriber side terminal device 9, the subscriber station device 7 removes the local tag from the received main signal frame (Step S306). By the frame header (encapsulation header) using the local tag and the remote tag, the encapsulation of the frame is performed after the removal of local tag by referring to the matching relation of the local tag and the remote tag stored in the matching information storage means 706 (Step S307). Similarly to the processing in Step S127 shown in Fig. 14, the subscriber station device 7 generates and stores the encapsulation header from the local tag and the remote tag in advance at the time of the processing of Step S307, and the processing to add the encapsulation header stored in advance may be performed at the time of encapsulation of the frame. Also, it is possible to generate the encapsulation header by using the local tag and the remote tag in response to the receiving of the frame.

Then, the subscriber station device 7 transmits the encapsulated main signal to the ISP side terminal device 6 (Step S309). In this case, the format of the frame flowing from the subscriber station device 7 to the ISP side terminal device 6 in Step S309 is the one shown in Fig. 10, for instance.

Upon receipt of the encapsulated main signal form the subscriber station device 7, the ISP side terminal device 6 performs decapsulation of the encapsulated main signal (Step S311) and transmits the frame after decapsulation (the same as the main signal frame transmitted from the subscriber terminal 1 to the subscriber side terminal device 9) toward a predetermined ISP management network (a predetermined ISP router 2a) (Step S313). By the processing of the Steps S301 - S311), the main signal frame transmitted from the subscriber terminal 1 reaches the ISP as desired via an access network 3 and can be transmitted to the external network.

On the other hand, the main signal sent from the external network such as Internet provided via connection service by ISP or from a management network of ISP is supplied to the ISP side terminal device 6 via the ISP router 2a (Step S321). The ISP side terminal device 6 determines the matching of the remote tag and the local tag from the destination MAC address of the main signal frame (MAC address of the subscriber terminal 1) by referring to the matching relation of the MAC address, the local tag, and the remote tag in the matching information storage means 604 (the matching information stored in Step S115 of Fig. 14) (Step S322). Then, by the frame header (encapsulation header) using the local tag and the remote tag determined in Step S322, the ISP side terminal device 6 performs encapsulation of the main signal frame (Step S323) and transmits the encapsulated main signal to the subscriber station device 7 (Step S325).

Similarly to the processing in Step S205 of Fig. 15, the ISP side terminal device 6 generates and stores the encapsulation header in advance from the local tag and the remote tag during the processing of Step S323. At the time of encapsulation of the frame, it may be so arranged that the encapsulation header stored in advance may be added. It is also possible to generate the encapsulation header using the local tag and the remote tag in response to the receiving of the frame. In this case, the format of the frame flowing from the ISP side terminal device 6 to the subscriber station device 7 in Step S325 is the one shown in Fig. 10, for instance.

Upon receipt of the encapsulated main signal from the ISP side terminal device 6, the subscriber station device 7 performs decapsulation of the encapsulated main signal (Step S327). After adding the matching local tag to the subscriber terminal 1 to the frame after decapsulation (Step S329), the main signal with the local tag is transmitted to the subscriber side terminal device 9 (Step S331). Similarly to the processing in Step S211 in Fig. 15, the subscriber station device 7 can also acquire the local tag to be added to the frame after decapsulation by referring to the matching information stored in the matching information storage means 706 during the processing of Step S329. Also, by analyzing the encapsulation header added to the encapsulated frame as received, it is also possible to acquire the local tag to be added to the frame after decapsulation. In this case, the format of the frame flowing from the subscriber station device 7 to the subscriber side terminal device 9 in Step S331 is the one shown in Fig. 9, for instance.

Upon receipt of the main signal with the local tag from the subscriber station device 7, the subscriber side terminal device 9 removes the local tag from the received frame (Step S333), and the frame after removing the local tag (the same as the main signal frame transmitted from the ISP router 2a to the ISP side terminal device 6) to the subscriber terminal 1 as set at the destination of the ISP authentication response (Step S335). By the processing in Steps S301 - S335, the main signal frame transmitted from the ISP side can reach a predetermined subscriber terminal 1 via the access network 3. Also, when the local tag to be added to the frame after decapsulation is to be acquired, by analyzing the encapsulation header added to the encapsulated frame as received, the burden of the load of the processing of the subscriber station device 7 can be extensively reduced in comparison with the case where the processing to specify the local tag is performed by referring to the matching information stored in the matching information storage means 706. Because the local tag matches the pass to ISP, the subscriber can selectively change the ISP of connection destination by selecting the local tag.

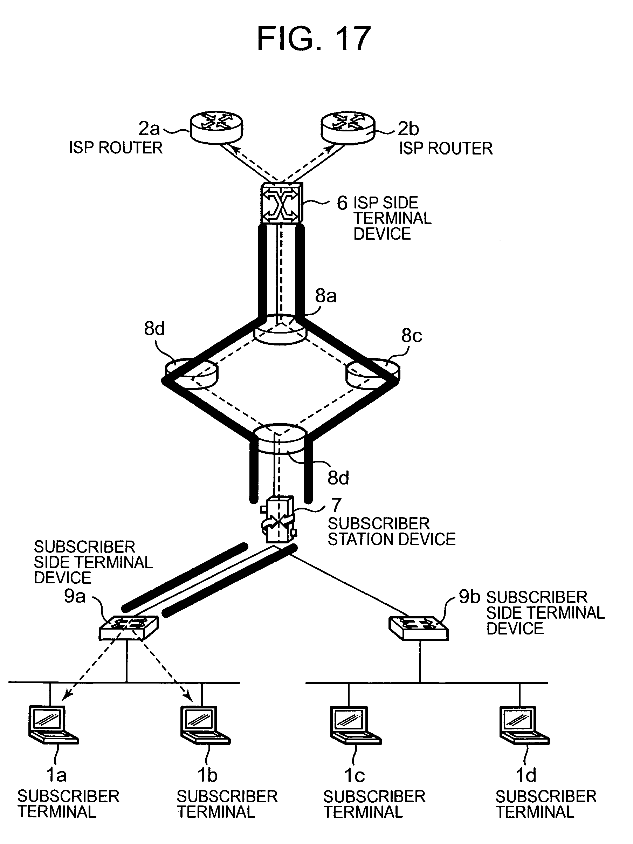

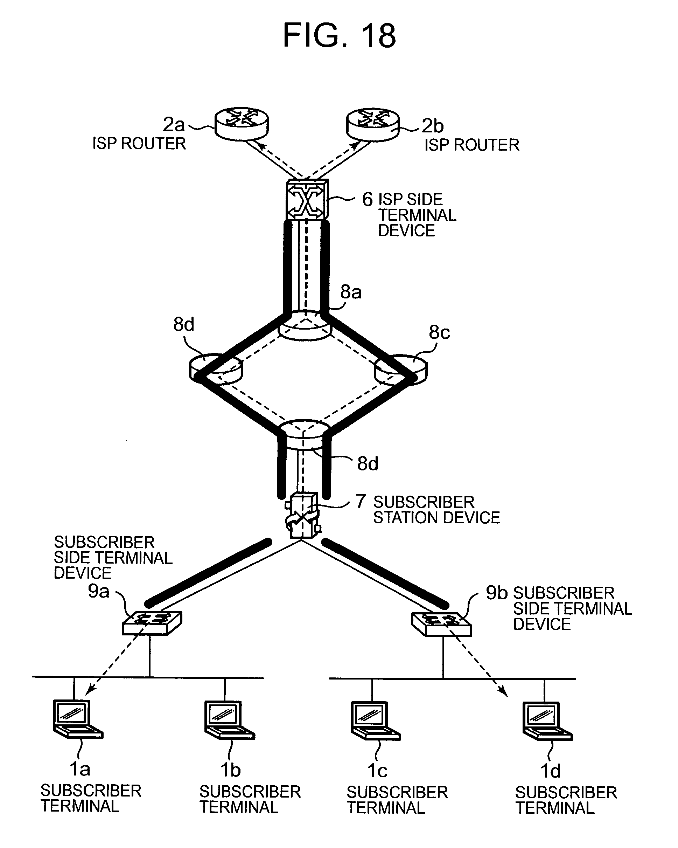

Next, description will be given on an example when a plurality of subscriber terminals 1 make connection to different ISPs at the same time in the present invention. Fig. 17 shows an example, in which connection is made to different ISPs from a plurality of subscriber terminals under the control of the same subscriber side terminal device in the network configuration in the embodiment of the present invention. Fig. 18 shows an example, in which connection is made to different ISPs from a plurality of subscriber terminals present under the control of each of the different subscriber side terminal devices in the network configuration in the embodiment of the present invention.

In Fig. 17 and Fig. 18, there are four subscriber terminals 1a - 1d and two subscriber side terminal devices 9a and 9b, and there are two subscriber terminals 1a and 1b under the control of the subscriber side terminal device 9a, and there are two subscriber terminals 1c and 1d under the control of the subscriber side terminal device 9b. In Fig. 17, the subscriber terminal 1a is connected to the ISP closer to the ISP router 2a and the subscriber terminal 1b is connected to the ISP, which is closer to the ISP router 2b. In Fig. 18, the subscriber terminal 1a is connected to the ISP, which is closer to the ISP router 2a, and the subscriber terminal 1d is connected to the ISP, which is closer to the ISP router 2b.

According to the present invention, the ISP side terminal device 6 can identify that the local tags allotted to each of the plurality of subscriber terminals 1a - 1d are different from each other. Therefore, the ISP side terminal device 6 can uniquely specify the destination of each of the subscriber terminals 1a - 1d by remote tag and local tag when the frame is transmitted to the downstream side. Even when a plurality of subscriber terminals 1a and 1b under the control of the same subscriber side terminal device 9a as shown in Fig. 17 are connected to different ISPs, or even when a plurality of subscriber terminals 1a - 1d under the control of each of different subscriber side terminal devices 9a and 9b as shown in Fig. 18 are connected to different ISPs, the frames can be transmitted from downstream side to upstream side or the frames can be transmitted from upstream side to downstream side without any trouble.

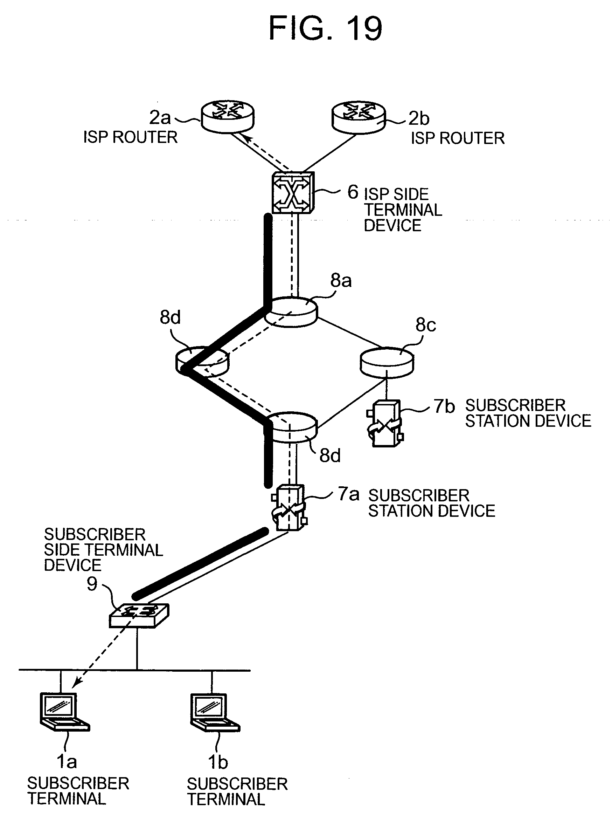

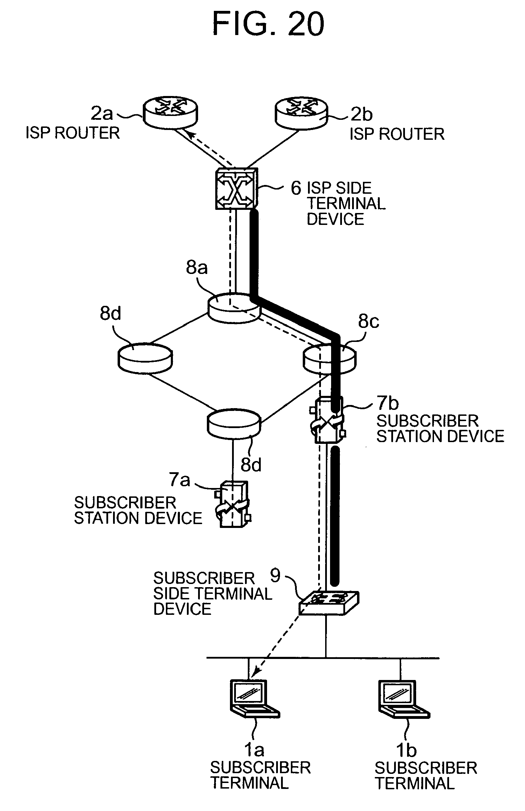

Next, description will be given on a case where the subscriber side terminal device 9 with a plurality of subscriber terminals 1 under its control is performing wireless communication with the subscriber station device 7 and the subscriber side terminal device 9 changes the subscriber station device 7 of the connection destination. Fig. 19 shows a condition before the subscriber side terminal device changes the subscriber station device 7 of connection destination in the network configuration in the embodiment of the present invention. Fig. 20 shows a condition after the subscriber side terminal device changes the subscriber station device 7 of connection destination in the network configuration in the embodiment of the present invention. Fig. 19 and Fig. 20 show how the subscriber side terminal device 9 with two subscriber terminals 1a and 1b under its control changes the connection from the subscriber station device 7a to the subscriber station device 7b.

According to the present invention, the subscriber station devices 7a and 7b perform management of the subscriber terminals 1a and 1b to make connection with ISP, and the subscriber side terminal device 9 is so arranged that a local tag is added to correspond to the connection with the ISP on 1:1 basis according to the subscriber station devices 7a and 7b. As a result, even when the subscriber side terminal device 9 moves between the subscriber station devices 7a and 7b, for instance, Nomadic connection can be achieved, in which the same connectivity is maintained before and after the moving. In the switchover of connection of the subscriber station device 7 by the subscriber side terminal device 9, not only the moving during wireless communication but also moving caused by replacement of wired cable for wired communication is also included.

### INDUSTRIAL APPLICABILITY

The access network system, the subscriber station device, and network terminal device according to the present invention make it possible to achieve inexpensive and simple arrangement and high-speed communication and to freely select ISP of connection destination for each subscriber terminal while maintaining various advantages when using VLAN, and to ensure reliable communication between the subscriber terminal and ISP. Further, Nomadic connection can be coped with. The invention can be applied for communication technique between the subscriber terminal owned by subscriber and a given communication network via an access network made up by a plurality of relay stations.

## Claims

1. An access network system for making access to a given network by a subscriber terminal, said access network system comprising:
a first network terminal device connected to said given network and terminating a first network for transfer on a layer 2 level;
a second network terminal device able to put said subscriber terminal under control and terminating a second network for transfer on said layer 2 level; and
a subscriber station device for connecting said first and said second networks with each other and terminating each of said first and said second networks, wherein:
the transmission of the frame is conducted by using a VLAN pass identified by a VLAN tag in said second network, and transmission of said frame added with a frame header including said VLAN tag used in said second network is conducted.

2. The access network system according to claim 1, wherein, in said first network, transmission of said frame is conducted by using a VLAN pass identified by a VLAN tag different from said VLAN tag used in said second network.

3. The access network system according to claim 1, wherein said subscriber station device is so arranged as to generate said VLAN tag used in said second network in response to a request of connection to said given network from said subscriber terminal.

4. The access network system according to claim 1, wherein MAC addresses of said first network terminal device and said subscriber station device used in said first network are generated according to said VLAN tag used in said first and said second networks, and MAC addresses of said first network terminal device and said subscriber station device are set up to destination MAC address and source MAC address of said frame header.

5. A subscriber station device included in an access network system where a subscriber terminal makes access to a given network, wherein:
a first network connected to said given network side and for performing transfer of a layer 2 level is connected to a second network connected to said subscriber terminal side and for performing transfer of said layer 2 level, and terminating each of said first and said second networks, said subscriber station device further comprises:
means for transmission of a frame using a VLAN pass identified by a VLAN tag in said second network; and
means for adding a frame header including said VLAN tag used in said second network to a frame to be sent to said first network.

6. The subscriber station device according to claim 5, wherein said VLAN tag used in said second network is generated in response to a request of connection to said given network from said subscriber terminal.

7. A network terminal device included in an access network system where a subscriber terminal makes access to a given network, connected to said given network and connected to a first network arranged on said subscriber terminal side, wherein said network terminal device comprises:
means for extracting a VLAN tag from a frame header, said VLAN tag being inserted in said frame header added to the frame received from said first network, said VLAN tag of said second network being added to said frame in a second network passing through before being transferred in said first network; and
storage means for storing by matching said VLAN tag extracted from said frame header with MAC address of said subscriber terminal being set up as destination of said frame.

8. The network terminal device according to claim 7, wherein said network terminal device comprises:
means for adding a frame header, including said VLAN tag matched with MAC address of said subscriber terminal and stored, to said frame when a frame addressed to said subscriber terminal is received from said given network side; and
means for sending the frame added with said frame header including said VLAN tag to said first network.

9. A network terminal device included in an access network system where a subscriber terminal makes access to a given network and being able to put said subscriber terminal under control, wherein said network terminal device comprises:
means for transmitting information to identify said given network to a subscriber station device where said subscriber terminal passes through when connecting to a given network in case a connection setup information to a given network is received from said subscriber terminal;
means for receiving a VLAN tag corresponding to connection to a given network by said subscriber terminal as a response to information to identify said given network from said subscriber station device;
storage means for storing by matching said VLAN tag with MAC address of said subscriber terminal;
means for adding said VLAN tag being matched with MAC address of said subscriber terminal in said arbitrary frame and stored when an arbitrary frame to be sent from said subscriber terminal to a given network is received; and
means for sending the frame added with said VLAN tag to said subscriber terminal.

## Amended claims

### Amended claims under Art. 19.1 PCT

1. An access network system for making access to a given network by a subscriber terminal, said access network system comprising:
a first network terminal device connected to said given network and terminating a first network for transfer on a layer 2 level;
a second network terminal device able to put said subscriber terminal under control and terminating a second network for transfer on said layer 2 level; and
a subscriber station device for connecting said first and said second networks with each other and terminating each of said first and said second networks, wherein:
the transmission of the frame is conducted by using a VLAN pass identified by a VLAN tag in said second network, and transmission of said frame added with a frame header including said VLAN tag used in said second network is conducted.

2. The access network system according to claim 1, wherein, in said first network, transmission of said frame is conducted by using a VLAN pass identified by a VLAN tag different from said VLAN tag used in said second network.

3. The access network system according to claim 1, wherein said subscriber station device is so arranged as to generate said VLAN tag used in said second network in response to a request of connection to said given network from said subscriber terminal.

4. The access network system according to claim 1, wherein MAC addresses of said first network terminal device and said subscriber station device used in said first network are generated according to said VLAN tag used in said first and said second networks, and MAC addresses of said first network terminal device and said subscriber station device are set up to destination MAC address and source MAC address of said frame header.

5. (Amended) A subscriber station device included in an access network system where a subscriber terminal makes access to a given network, wherein:
a first network connected to said given network side and for performing transfer of a layer 2 level is connected to a second network connected to said subscriber terminal side and for performing transfer of said layer 2 level, and terminating each of said first and said second networks, said subscriber station device further comprises:
means for generating a VLAN tag used in the second network in response to a request of connection to said given network from said subscriber terminal;
means for transmission of a frame using a VLAN pass identified by said VLAN tag in said second network; and
means for adding a frame header including said VLAN tag used in said second network to a frame to be sent to said first network.

6. Deleted

7. A network terminal device included in an access network system where a subscriber terminal makes access to a given network, connected to said given network and connected to a first network arranged on said subscriber terminal side, wherein said network terminal device comprises:
means for extracting a VLAN tag from a frame header, said VLAN tag being inserted in said frame header added to the frame received from said first network, said VLAN tag of said second network being added to said frame in a second network passing through before being transferred in said first network; and
storage means for storing by matching said VLAN tag extracted from said frame header with MAC address of said subscriber terminal being set up as destination of said frame.

8. The network terminal device according to claim 7, wherein said network terminal device comprises:
means for adding a frame header, including said VLAN tag matched with MAC address of said subscriber terminal and stored, to said frame when a frame addressed to said subscriber terminal is received from said given network side; and
means for sending the frame added with said frame header including said VLAN tag to said first network.

9. (Amended) A network terminal device included in an access network system where a subscriber terminal makes access to a given network and being able to put said subscriber terminal under control, wherein said network terminal device comprises:
means for transmitting information to identify said given network to a subscriber station device where said subscriber terminal passes through when connecting to a given network in case a connection setup information to a given network is received from said subscriber terminal;
means for receiving a VLAN tag corresponding to connection to a given network by said subscriber terminal as a response to information to identify said given network from said subscriber station device;
storage means for storing by matching said VLAN tag with MAC address of said subscriber terminal;
means for adding said VLAN tag being matched with MAC address of said subscriber terminal in said arbitrary frame and stored when an arbitrary frame to be sent from said subscriber terminal to a given network is received; and
means for sending the frame added with said VLAN tag to said subscriber station device.
